# EUROPEAN PATENT APPLICATION

(11) **EP 3 812 447 A1**
(43) Date of publication of application: **28.04.2021**
(21) Application number: 18923509.6
(22) Date of filing: 02.07.2018
(51) Int. Cl.: C11B 1/00, C11B 1/10, B01D 17/04

(54) **USE OF A POLYSACCHARIDE MICROGEL REAGENT IN VEGETABLE OIL PRODUCTION**

(30) Priority: 21.06.2018 RU 2018122685
(71) Applicant: Obschestvo s Ogranichennoj Otvetstvennostyu "NPO BioMikroGeli", Ekaterinburg, 620010 (RU)
(72) Inventor: ELAGIN, Andrei Aleksandrovich, Ekaterinburg, 620142 (RU); MIRONOV, Maksim Anatolievich, Ekaterinburg, 620102 (RU)
(74) Representative: CSY London
(86) International application number: PCT/RU2018/000437
(87) International publication number: WO 2019/245398

(57) **Abstract**

The invention relates to methods and reagents used in production of vegetable oils, including methods and reagents for separation of vegetable oils from an aquatic phase with a solid residue and/or for separation of vegetable oil from solid residue, and/or for removal of contaminants from vegetable oils produced from vegetable raw materials. This groups of inventions is aimed at solving the technological problem of expanding the range of reagents and methods capable of raising efficiency of vegetable oil production. The technological result, that this group of inventions aspires to achieve is to ensure that production of vegetable oils can be made more efficient. The first aspect of this group of inventions is making reagents based on polysaccharide microgels and using them in a vegetable oil production method.

## Description

This group of inventions relates to methods and substances used in production of vegetable oils, including methods and substances used in extraction of oils from water that contains solid residue, and/or in separation of oil from solid residue and/or in removal of contaminants from vegetable oils obtained from vegetable sources. This group of inventions can be used in various industries related to vegetable oil production as well as in domestic production.

Improving efficiency of vegetable oil production is a world-wide problem, an especially urgent problem is extracting oil from the aquatic phase resulting from various stages of production and containing a significant amount of solid residue (oilcake), as well as separation of oil from the residue (oil cake) because up to 10% of vegetable oil might precipitate on its surface. That medium represents a dense suspension, which makes oil extraction difficult without special reagents and components. Diluting this suspension with a large quantity of water can be used only within certain limits because of the problem of utilisation of the resulting drain fluid. One of the important reason for low efficient vegetable oil extraction can be oxidation and hydrolysis of oils (formation of free fatty acids), occurring during the protracted period of extraction. The free fatty acids formed impair consumer properties of the oils. For the solution of this problem, various agents and methods were offered, aimed at improving efficiency of vegetable oil production. Some of these methods and agent are mentioned below.

There is a method of extracting vegetable oil from solid residue, which includes pulverisation, wet-heat treatment up to 8-14%, squeezing oil out, fermenting the solid residue with a mixture of enzymes characterised by cellulose and protease activity, mechanical activation by repeatedly passing through a narrow space of variable cross section, holding, phase separation in a centrifuge, then extracting oil from the residue with water [RU2094451, C11B1/00, 27.10.1997].

There is also a method of improving productivity of vegetable oil extraction, which includes mixing the solid residue -with vegetable oil in it- with a mixture of enzymes characterised by cellulose and mannanase activity, holding the mixture for 1-20 hours at 50-95° C, then separating oil from the residue, which can be done with a centrifuge [EP3234083, CHB1/02, 25.10.2017].

The following method was chosen as the prototype for this group of inventions: removing solid contaminants from vegetable oil with the use of polysaccharides, which includes pulverising the raw material, mixing the oil-containing suspension with a chitosan solution, mixing the resulting mixture with activated carbon, separating the oil phase from the solid residue, bonded with chitosan and activated carbon, then collecting the purified oil [US2011183053, A23D9/00, A23D9/02, 28.07.2011].

The drawback of the prototype as well as of similar methods is poor efficiency of separation of vegetable oil from the aquatic phase with a solid residue, such as oil cake, slow separation of oil from the residue as well as having to add several ingredients, which then are difficult to remove. These drawbacks encourage a search for new, safe reagents that would boost up efficiency of vegetable oil production.

The technical problem that this group of inventions aims to resolve is to expand the range of reagents and methods capable of improving efficiency of vegetable oil production.

The technological result this group of inventions aims at is ensuring that efficiency of vegetable oil production has increased.

The essence of this group of inventions is as follows.

Using a polysaccharide microgel for extraction of vegetable oil.

Using a polysaccharide microgel for extraction of vegetable oil from the aquatic phase formed during the vegetable oil extraction process.

Using a polysaccharide microgel for extracting vegetable oil from an aquatic medium with solid residue in it.

Using polysaccharide microgels for separating vegetable oil from solid residue.

A reagent for extracting vegetable oil, wherein it contains polysaccharide in the form of polysaccharide microgel.

A polysaccharide containing reagent for improving efficiency of vegetable oil production from an aquatic phase, wherein it contains a polysaccharide in the form of a polysaccharide microgel.

A reagent for extracting vegetable oil from a solid residue, wherein it contains polysaccharide in the form of polysaccharide microgel.

A method of production of vegetable oil, which includes pulping the oil-containing raw material, adding polysaccharide into the pulped residue and extracting oil from the residue formed, wherein the polysaccharide presents a polysaccharide microgel.

The term "vegetable oils" used in this group of inventions covers any oil produced from vegetable raw materials containing oil in their soft tissues: fruit, stone fruit etc, the process of production of which includes their extraction from aquatic suspensions, palm, olive, coconut, sea-buckthorn, avocado oil etc. This group of inventions can also be used to boost up efficiency of extracting oil from grain kernels of such cultures as corn and wheat by treating them with hot water containing polysaccharide microgels.

Polysaccharides used in this group of inventions include carboxymethyl cellulose and its salts with aliphatic amines (butylamine, benzylamine, ethylenediamine, hexamethylenediamine), chitosan with diacethylation rate of 90-97% and its salts with organic acids, pectin substances with <25% concentration of residual methoxy-groups and their salts with aliphatic amines (butylamine, benzylamine, ethylenediamine, hexamethylenediamine), modified starch and other substances capable of forming stable submicron gels.

Polysaccharide microgels might include colloid solutions of the above-mentioned polysaccharides, representing a gel with 90-99% water, capable of forming opal suspensions. Particles of polysaccharide microgels can swell significantly in solvents due to electrostatic or steric repulsion between the charged groups. Polysaccharide microgels form by a phase transition which results in the structuring of polysaccharide molecules. Structural units of polysaccharide microgels are submicron particles of 0.1-1 µm, built of linear polysaccharide molecules, which are 1- 10 nm in size. Thus, polysaccharide microgels represent a particular form of polysaccharides, revealing some previously unknown properties in various industrial applications and in everyday life. Crosslinking polymer chains is used to improve stability of polysaccharide microgels: anhydrides and activated esters of dicarboxylic acid, diisocyanides, diisocyanates and other crosslinking agents. Polysaccharide microgels can also be produced by physical association.

Polysaccharide microgels have strong affinity to interphase surfaces, which is the basis for their practical application. They form monolayers on surfaces of solid bodies, such as particles of vegetable matter, metals, silicates, plastics and other materials. They are also capable of encapsulating organic solvents (benzene, toluene, chlorohydrocarbons), crude oil products and vegetable oils.

Polysaccharide microgels can be prepared, using known technologies, including preliminary modification of original polysaccharides with the use of hydrolysis, carboxymethylation, alkylation, acylation, ammonolysis, hydrazynolysis, reaction with aliphatic amines, Ugi reaction and also, in some cases, crosslinking, using reactions with diesters, diamines, dialdehydes, diisocyanates, diisocyanides, genipin or other crosslinking agents, or adding an acid or alkali solution to achieve an optimum pH for the formation of microgel particles.

Polysaccharide microgels can be used in combination with various surfactants. In this case, their choice can be based on composition of the surfactant. Microgels with a positively charged surface can be combined with cation surfactants, while microgels with a negatively charged surface can be combined with anion or with non-ionic surfactants. Polysaccharide microgels with carboxymethylcellulose based carboxyl groups, starch or pectin, can be used in combination with anion or non-ionic surfactants in neutral or acid media. On the other hand, polysaccharide microgels with chitosan-based amino groups can be combined with cation surfactants in alkaline media. On the whole, restrictions on combination of components in reagents for the extraction of oil are dictated by trying to avoid the negative effect of formation of insoluble precipitates when mixing oppositely charged components.

Various kinds of surfactants can be used, including anionic, non-ionic, cationic or amphoteric agents. Organic sulfates, alkyl-sulfonic acid and its salts, salts of fatty acids can be used as anionic surfactants for example, while glycosides, diethanolamide of coconut oil fatty acids or ethoxylated fatty alcohols can be used as non-ionic surfactants, and quaternary ammonium salts of fatty amines or betaines of fatty acids, acylcholine or other known surfactants can be used as cation surfactants.

Ratio between a polysaccharide microgel and a surfactant can vary in the 100:1 to 1:100 range. The lower limit is dictated by the fact that an excessive amount of microgel would reduce mobility of oil droplets, which would make their extraction impossible. The upper limit can be explained by that an excessive amount of a surfactant would contaminate the oil; also an excessive amount of a surfactant is detrimental within this technology because poorly delaminating emulsions might form, which has a negative effect on oil extraction rate.

Reagents containing a polysaccharide microgel can be presented in the form of aquatic solutions of different concentration, usually up to 20%; however, that concentration is unimportant because the critical role is played by polysaccharide microgel concentration in the total quantity of the medium where it is introduced. Polysaccharide microgels can be dehydrated, using any standard method, by lyophilization (freeze-drying) for example, then again diluted with water to obtain a solution of required concentration. Experimental data show that polysaccharide microgels have a positive effect on production of vegetable oils at any concentrations. However, the optimal concentration is 0.025-20 g/l (from 0.0025 to 2%) -calculated on the dry weight basis- with respect to the total quantity of the treated medium. The strongest effect takes place in the 0.1-1.0 g/l (0.01-0.1%) calculated on the dry weight basis with respect to the total quantity of the treated medium where the microgel is introduced. Using solutions of higher a concentration results in a greater effect, but the difference is not very significant.

Use of polysaccharide microgels improves efficiency of vegetable oil production in the course of different stages of the production process: dilution, sedimentation, centrifugation, separation, filtration and the treatment of water left after completion of the full industrial oil production cycle; polysaccharide microgels can also be used in any other vegetable oil extraction methods, when the separation of oil from water suspension, solid residue and/or water phase that contains that residue is required.

Production of vegetable oil can include the following stages: sterilisation of raw materials, pulverisation of raw materials, dilution of the product with hot water (at 40-90° C), sedimentation of the resulting mixture, in the course of gentle stirring, centrifugation of the sediment produced after sedimentation, and utilisation of the aquatic phase left after complete industrial extraction of oil. A polysaccharide microgel can be introduced either directly into the product obtained during pulverisation of raw materials or after the sedimentation stage, or else into the residue left after centrifugation. Introducing polysaccharide microgels in the process of diluting the product obtained after pulverisation of raw materials with hot water has the greatest effect because it raises efficiency of the oil production process to a maximum level, without altering the technological process to any significant extent. As polysaccharide microgel stays in the aquatic phase till the end of the technological process, its introduction at the stage of diluting with hot water covers all the following stages of the technological process, thus increasing oil extraction rate to the limit, cutting down the time required for the oil production process and reducing energy consumption.

This group of inventions is characterised by the new important characteristic, not previously existing at the present technological level: using polysaccharide microgels in vegetable oil production. Polysaccharide microgels help to separate oil from the aquatic phase with particles of solid residue more efficiently because the introduction of a polysaccharide microgel into a viscous medium that contains solid residue and vegetable oil increases mobility of that system as particles of the microgel envelop droplets of oil and/or particles of solid residue, making both the droplets and/or solid particles negatively charged, so that they repel one another. The droplets float to the surface, from where they can be easily removed, which ensures that the technological result is achieved: extraction of vegetable oil becomes more efficient, which broadens the range of reagents and methods aimed at improving efficiency of vegetable oil production.

The above discourse suggests that this group of inventions is new and non-obvious for an expert in the appropriate technological field. Consequently, it meets the "novelty" and "invention level" patentability criteria.

This group of inventions can be carried out using known materials and means, which suggests that these inventions fit with the "industrial applicability" patentability criterion.

This group of inventions is united with a single invention idea, which is using polysaccharide microgels in production of vegetable oils. Consequently, it meets the "unity of invention" criterion of patentability.

This group of inventions has been tested in the laboratory. The results of the experiments are shown in appropriate tables, on appropriate drawings and in the examples of application of different polysaccharide microgels introduced in different stages of production of different vegetable oils.

Since this group of inventions aims at expanding the range of reagents and methods capable of making production of vegetable oils more efficient, and the technological result it aims at is ensuring that efficiency of the production of vegetable oil can be improved, it was considered appropriate to show that the desired technological result has been achieved by proving experimentally that introduction of a polysaccharide microgel (in varying quantities and at different stages of the production process) makes extraction of vegetable oil more efficient or that it cuts down time, energy and other expenses required for the production of vegetable oil. Consequently, control data for vegetable oil extraction process used in these experiments were taken from laboratory tests of samples of industrial residues obtained at different stages of the technological process, containing no added agents that could boost up efficiency of the production process.

The following are examples of implementation of these inventions, which confirm that the desired technological result can be achieved and which can be changed or complemented in any way and which cannot be used as if limiting the scope of legal safeguard, defined by the independent items of the Claims.

The following diagrams illustrate this group of inventions.
Fig. 1. Residual oil content (%) as a function of concentration of a polysaccharide microgel (g/1) as in example 1.
Fig. 2. Approximate oil separation rate (min.) as a function of polysaccharide microgel concentration (g/1).
Fig. 3. Residual concentration of oil (%) as a function of polysaccharide microgel concentration (g/1) as in Example 2.

**Example 1.** Extraction of palm oil from aquatic suspension; a carboxymethyl cellulose-based microgel was introduced at the sedimentation stage under laboratory conditions.

A 1 *l* sample of pulped fruit of oil-palm was heated in bain-marie at 80° C while vigorously stirred; then 5 probes, 100 ml each, were taken from that volume and placed into glass flasks. 10 ml of hot water (90° C), which contained/has not contained a carboxymethyl cellulose-based microgel, was introduced into each probe. The probes were held for 1 h, while they were gently stirred in a shaker at 75° C. When stirring was completed, most of the oil was removed from the probes with a syringe, while a 9.5 ml probe was taken from the water layer. Using boiling hexane, oil was extracted from the probe (twice by 20 ml; then these two portions were united and evaporated in a rotor evaporator), while the probe itself was analysed under the microscope to verify whether all of the oil has been removed. The quantity of extracted oil was measured by weighing the flask before and after evaporation. Probes with different quantities of the polysaccharide microgel (in the form of 10% aquatic solution) and one probe free of any additives were analysed.

**Table 1. Residual oil concentration as a function of polysaccharide microgel concentration as in Example 1.**

| Probe No. | Polysaccharide microgel concentration, g/l (dry per total quantity of the medium) | Residual oil content, % |
|---|---|---|
| 1 | 0 | 11.5 |
| 2 | 0.25 | 8.6 |
| 3 | 0.5 | 3.5 |
| 4 | 0.75 | 2.8 |
| 5 | 1 | 2.3 |

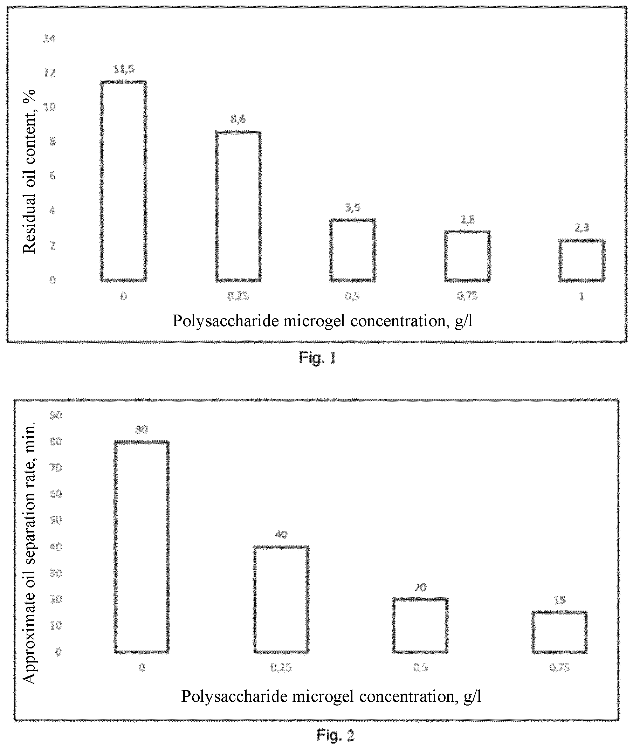

Table 1 and Fig. 1 show that the residual content of oil drops decreases as the quantity of the polysaccharide microgel increases. The greatest drop is recorded in the 0.25-0.5 g/l range. It needs to be mentioned that stirring had a strong effect on the extent of oil extraction. This means that the carried out experiments reflect the general pattern of oil extraction. Maximum possible reduction of oil content might be greater than the results achieved in the laboratory. On the whole, introduction of a polysaccharide microgel into the sample of the residue left after pulverisation increased oil extraction efficiency at the sedimentation stage by more than 4 times.

An important characteristic of the polysaccharide microgel is its effect on separation rate during sedimentation of the residue sample taken after pulverisation. As concentration of the polysaccharide microgel increased, the oil layer formation rate increased so significantly that one could observed that effect with naked eye. The results are shown in Fig. 2.

In absence of polysaccharide microgels, the oil layer forms slowly; the process is completed after about 80 min of stirring. In presence of 0.75 g/l of microgel, the oil layer fully forms after 15 min, so that holding the sample further for 45 min had no effect. Thus, using the polysaccharide microgel during the sedimentation stage makes vegetable oil production more efficient not only by increasing the quantity of extracted oil but also by cutting own sedimentation time by approximately 4-5 times.

**Example 2.** Extraction of olive oil from aquatic suspension when a pectin-based microgel was used at the centrifugation stage under laboratory conditions.

A 1 *l* sample of pulped olives was vigorously stirred; then 4 probes, 100 ml each, were taken and placed into glass flasks. Then 10 ml of water, which either contained or not the pectin-based microgel, were added to each probe. Most of the accumulated oil was removed from the probes with a syringe. The water layer left after that was centrifuged for 5 min. at room temperature and at 3,500 rpm. The oil formed after centrifugation was removed, and a 9.5 ml probe was taken from the residual water layer. Oil was extracted from that probe with boiling hexane (twice by 20 ml, which were then united and concentrated by evaporation in a rotor evaporator), while the probe itself was analysed under the microscope to verify whether oil was completely removed. Oil extracted in the centrifuge was measured by weighing. Quantity of the extracted oil was established by weighing the flask before and after evaporation. Probes of water layers with different concentration of added polysaccharide microgel (in the form of a 5% aquatic solution) and one probe without any additives was analysed at the end of this experiment.

**Table 2. Residual oil content as a function of the polysaccharide microgel according to Example 2.**

| Probe No. | Polysaccharide microgel concentration, g/l (dry per total quantity of the medium) | Residual oil content, % |
|---|---|---|
| 1 | 0 | 1.8 |
| 2 | 0.5 | 0.85 |
| 3 | 0.75 | 0.56 |
| 4 | 1 | 0.45 |

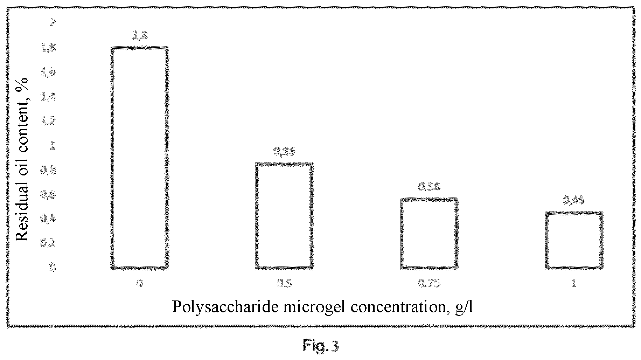

One can see from Table 2 and Fig. 3 that the residual oil content in the water layer left after centrifugation decreases as concentration of the polysaccharide microgel increases. Introduction of the polysaccharide microgel to the sample of the residue after the pulping stage reduced the residual oil content after the centrifuge by approximately 4 times in comparison with the sample that contained no additives.

It also needs to be mentioned that due to the design of the laboratory stirrer and centrifuge, the samples were processed at 75° C rather than at 90° C, which had no adverse effect on oil extraction rate. This fact suggests that the use of a polysaccharide microgel in vegetable oil production permits improving its efficiency due to more economic energy consumption.

**Example 3.** Coconut oil extraction from an aquatic suspension during sedimentation in the laboratory, using a starch-based microgel.

A 1 *l* sample of pulped pulp of coconut was heated in a bain-marie at 40° C, vigorously stirred; then 2 probes, 100 ml each, were taken from that volume and placed into glass flasks. Than 10 ml of water with a starch-based microgel were added to each probe. A 20% solution of a polysaccharide microgel (0.75 g/l calculated on the dry weight basis) was added to one of the flasks, while the other flask was left in its original state. Both probes were held for 1 h, while they were gently stirred in a shaker at 40° C. Most of the accumulated oil was removed from the probes with a syringe; then a 9.5 ml probe was taken from the water layer. Oil was extracted from that probe with boiling hexane (twice by 20 ml; then these were united and concentrated by evaporation in a rotor evaporator), while the probe itself was analysed under the microscope to verify that all the oil was removed from it. Quantity of the extracted oil was measured by weighing the flask before and after evaporation.

Analysis showed that oil content in the aquatic phase of the samples after the sedimentation state was as follows: 0.75g/l, i.e. 2.6% in presence of the polysaccharide microgel, and 8.7% in absence of the microgel. These results resemble those obtained in Example 1. Consequently it can be assumed that the polysaccharide microgel increased efficiency of oil extraction approximately by 3 times under laboratory conditions.

**Example 4.** Extraction of sea-buckthorn oil from am aquatic phase formed after complete industrial extraction of oil, using a carboxymethyl cellulose salt-based polysaccharide microgel.

A 1 *l* sample of pulped sea-buckthorn fruit with original oil content of 5.4% was heated in a bain-marie at 40° C, vigorously stirred. Then a 100 ml probe was taken from that volume and placed into a glass flask. That probe was centrifuged for 5 min. at room temperature and 3,500 rpm. The separated oil was then removed. The water phase was subdivided into two probes: 50 ml each. One of the probes was left as is, while a 15% carboxymethyl cellulose salt-based microgel (0.75 g/l calculated on the dry weight basis) was introduced into the other probe. Both probes were heated at 40° C, stirred for 10 min. and centrifuged for 5 min at 30° C and 3,500 rpm. A comparison of the probes was carried out. It was established that 80 mg of oil (0.16%) collected by centrifugation on the surface of the probe with polysaccharide microgel, while no oil at all collected on the surface of the probe without polysaccharide microgel. This signifies that polysaccharide microgel promotes additional extraction of oil from the aquatic phase left after industrial oil extraction.

**Example 5.** Extraction of oil from wheat germ, using a chitosan-based polysaccharide microgel.

A 100 g sample of wheat germ, with original moisture content of 21% and with oil content of 11.3% was pulped in a laboratory roll crusher. This probe was mixed with 100 ml of 70° C water with a chitosan-based polysaccharide microgel (at 0.5 g/l concentration). The mixture was stirred for 30 min., then centrifuged for 5 min. at room temperature and 3,500 rpm. The oil collected on the surface of that pulp was removed with a syringe. The total quantity of the collected oil was 6.5 g. No oil was observed on the surface of the centrifuged wheat germ of the probe without polysaccharide microgel.

Thus, the use of polysaccharide microgel in production of vegetable oil permits running processes at a lower temperature, increases separation rate and reduces residual oil content in the aquatic phase during the sedimentation as well as centrifugation stages. It also facilitates additional oil extraction from the aquatic phase after industrial oil extraction has been completed. This suggests that the desired technological result - improved efficiency of vegetable oil production - can be achieved, thus broadening the range of reagents and methods designed to boost up vegetable oil production efficiency.

## Claims

1. Application of polysaccharide microgels in vegetable oil production.

2. Application of polysaccharide microgels in extraction of vegetable oil from the aquatic phase formed during the vegetable oil production process.

3. Application of polysaccharide microgels in extraction of vegetable oil from an aquatic phase with solid residue.

4. Application of polysaccharide microgels to separate vegetable oil from solid residue.

5. Application as in any of 1-4, wherein the polysaccharide microgel can represent a microgel based on modified starch and/or on pectin, and/or carboxymethyl cellulose, and/or chitosan.

6. Application in accordance with any of 1-4, wherein the polysaccharide microgel has particle size of 0.1-1 µm.

7. Application in accordance with any of 1-4, wherein concentration of dry polysaccharide microgel comprises 0.025-20 g/l of the total medium treated.

8. Application in accordance with any of 1-4, wherein polysaccharide microgel concentration comprises 0.1-1.0 g/l calculated on the dry weight basis for the total quantity of the medium treated.

9. A reagent for improving efficiency of production of vegetable oils, which contains a polysaccharide, wherein it contains a polysaccharide in the form of a microgel.

10. A reagent for extracting vegetable oil from an aquatic phase, wherein the polysaccharide in the aquatic phase presents a microgel.

11. A reagent for extracting vegetable oil from the solid residue, which contains a polysaccharide, wherein polysaccharide in the solid residue presents a microgel.

12. A regent as in any of 9-11, wherein it presents an aquatic solution of a polysaccharide microgel of up to 20% concentration.

13. A reagent as in any of 9-11, wherein it presents a powder, produced by dehydrating the polysaccharide microgel solution.

14. Reagent as in any of 9-11, wherein it also contains a surfactant.

15. Reagent as in 14, wherein the quantity of polysaccharide microgel relates to that of the surfactant as 100:1 - 1:100.

16. Method for producing a vegetable oil, which includes pulping the oil-containing material, introducing a polysaccharide to the residue formed by the pulping, and extraction of oil from the produced residue, wherein the polysaccharide used presents a microgel.

17. Method as in 16, wherein the oil extraction stage includes diluting the product produced by pulping with hot water, and that the polysaccharide microgel is introduced at that time.

18. Method as in 16, wherein the oil extraction stage includes sedimentation, and the polysaccharide microgel is introduced at that time.

19. Method as in 16, wherein the oil extraction stage includes centrifugation, and polysaccharide microgel introduced in that time.

20. Method as in 16, wherein the oil extraction stage includes additional extraction of oil from the aquatic phase, and polysaccharide microgel is introduced at that time.
